Europäisches Patentamt

European Patent Office

Office européen des brevets

(19)

(11) Publication number: 0 132 061
A2

(12) EUROPEAN PATENT APPLICATION

(21) Application number: 84304245.8

(22) Date of filing: 22.06.84

(51) Int. Cl.⁴: F 23 C 11/02
F 23 J 1/00, C 10 J 3/52

(30) Priority: 15.07.83 GB 8319139

(43) Date of publication of application:
23.01.85 Bulletin 85/4

(84) Designated Contracting States:
BE DE FR NL

(71) Applicant: Coal Industry (Patents) Limited
Hobart House Grosvenor Place
London SW1X 7AE(GB)

(72) Inventor: Dando, Russell Llewelyn
2 The Butts
Newent Gloucestershire(GB)

(72) Inventor: Napier, Brian Anthony
46 Main Street Sedgeberrow
Evesham Worcestershire(GB)

(74) Representative: Wood, John Irwin
Hobart House Grosvenor Place
London SW1X 7AE(GB)

(54) Improvements in or relating to fluidised bed systems.

(57) An air classifier system for classifying bed particles inclu-des a drop tube (9) leading from a reaction chamber (2) and communicating with a discharge tube (12) in which is located a gas ejector (16). The classifier (18) in which air is used as an aerodynamic sieve to entrain particles of an acceptable size for return through the conduit (14) to the bed (4). Oversize particles descend through the classifier (18) for discharge into a receptacle (28).

EP 0 132 061 A2

Croydon Printing Company Ltd

- 1 -

Case 4600

"IMPROVEMENTS IN OR RELATING TO FLUIDISED BED SYSTEMS"

This invention concerns improvements in or relating to fluidised bed systems.

In particular, the present invention has reference to a system for the regrading of bed material. During the operation of a fluidised bed combustor in which solid fuel is burnt, oversize ash particles may form and can accumulate to a degree unacceptable for the efficient fluidisation of the bed. It is, therefore, necessary to provide a system enabling the removal of bed material for the purpose of regrading or classifying the particles into fractions for reuse within the bed and for discharge respectively. One method conceived for this function is that disclosed in our copending patent application, No. 83/00663 (Case 4562), the method including the steps of passing bed material directly into a pneumatic classifier, attached below the bed, where preheated air injected into the down-flowing particles, classifies them by entraining those of acceptable size and reintroducing them back directly into the bed at the base thereof. The oversize particles fall through the injected air and are subsequently discharged from the system which may conveniently be disposed within the plenum chamber of the fluidised bed combustor or boiler. Whilst the above described system functions satisfactorily it has some potential disadvantages when used in conjunction with some fluidised bed boiler systems. For example, because particles are directed into the base of the fluidised bed by means of entraining air, impingement of particles upon heating surfaces within the bed may cause erosion problems. Furthermore, elutriation of bed material may be exacerbated by the re-entry of classified particles, effectively in the form of a spout within the bed.

An object of the invention is therefore to provide an improved air classifier system for the classification of particles and a fluidised bed apparatus in combination therewith.

Accordingly, the invention provides as a first aspect an air classifier system for the classification of particles, the system including a drop tube connectible to the reaction chamber of a fluidised bed apparatus, a discharge tube connected to the drop tube, a gas ejector disposed within the discharge tube for inducing particle flow therealong, a gas-operated classifier communicating with the discharge tube, and the classifier having an outlet connected to a conduit for the return, in use, of particles to the fluidised bed apparatus.

Conveniently, the air classifier system is located externally of the fluidised bed apparatus which may be a combustor or a gasifier.

The drop tube may be angularly or vertically orientated and opens into the conduit at a point above the classifier which conveniently includes a perforated cylindrical core forming a downward extension to the conduit, and a jacket surrounding the core providing an annular manifold having a gas inlet. The perforated core is connected at its other end via a control valve to a receptacle or a means of conveying oversize ash particles to a suitable disposal point.

In use in conjunction with fluidised bed apparatus, the conduit extend from the classifier to enter the reaction chamber, preferably at a location above the top level of the fluidised bed.

According to a second aspect of the invention there is provided in combination a fluidised bed apparatus including a reaction chamber adapted to contain a fluidised bed of particulate material, and an air classifier system having a drop tube opening into and leading from the chamber, a discharge tube connected to the drop tube, a gas ejector disposed within the discharge tube for inducing particle flow therealong, a gas-operated classifier communicating with the discharge tube, and the classifier having an outlet connected to a conduit which extends from the classifier and opens into the reaction chamber.

Two or more drop tubes may be provided, each opening into and leading from a different location in the chamber. The drop tubes may all be connected to a common classifier or may have a separate classifier connected thereto in a discharge tube.

According to a third aspect of the invention there is provided a method of operating the combination of the air classifier system and the fluidised bed apparatus according to the second aspect, the method including the steps of establishing a fluidised bed of particulate material within the reaction chamber, carrying out a reaction in the bed, withdrawing particles from the bed through the drop tube, operating the ejector to induce flow of particles along the discharge tube into the conduit and thence into the classifier, classifying the particles by the introduction of gas into the classifier whereby particles of acceptable size are entrined in the gas, and returning the entrained particles to the reaction chamber.

The gas employed in both the ejector and the classifier is conveniently air which may be provided at ambient temperature or which may be preheated, but may be nitrogen or steam in the case of a gasifier.

The method also includes the step of modulating the operation of the ejector in order to vary the rate of particle flow to the classifier.

This modulation may be necessary to prevent blockages caused by excessive concentrations of particles in the conduit. Particles which are oversize are not entrained by the gas within the classifier and fall under gravity to be discharged from the system.

By way of example only one embodiment of a fluidised bed system according to the invention in combination with a fluidised bed apparatus is described below with reference to the accompanying drawings in which:

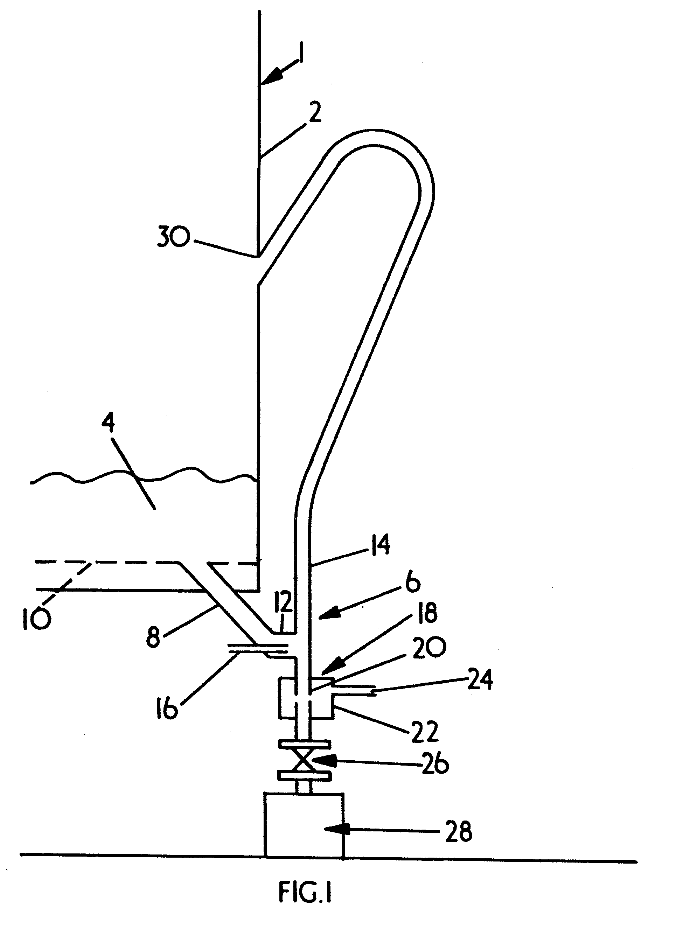

Figure 1 is a diagrammatic view of the combination; and

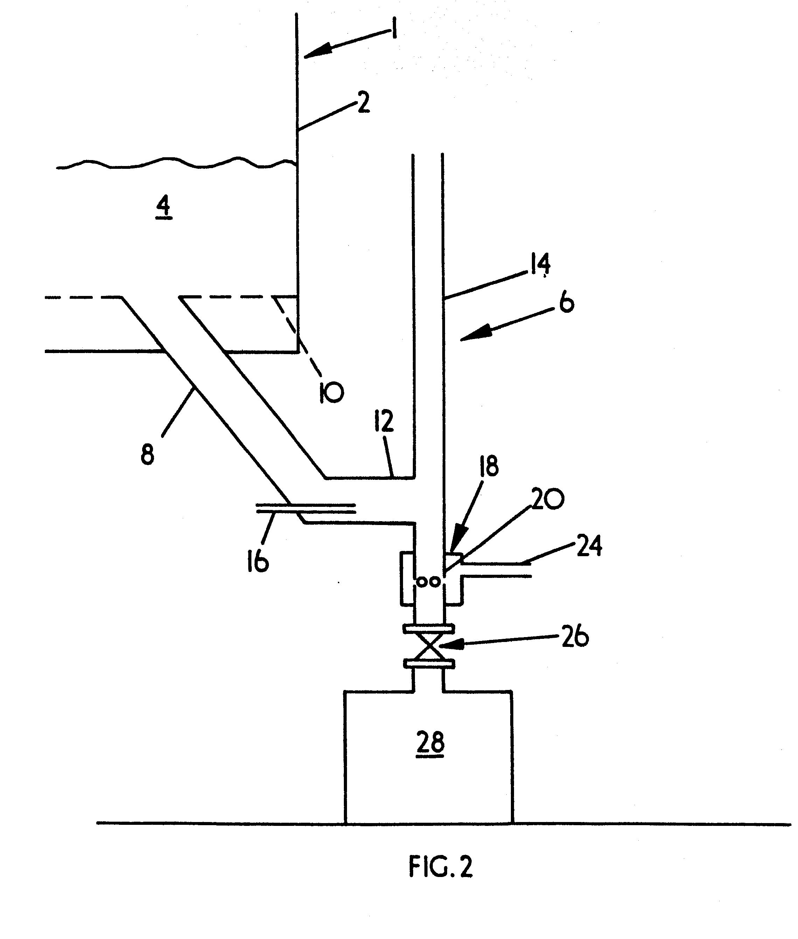

. Figure 2 is a similar view to that of Figure 1 on an enlarged scale.

With reference to Figures 1 and 2, there is shown a fluidised bed apparatus 1 comprising a reaction chamber 2 holding a bed 4 of fluidised particulate material. An air classifier system is depicted at 6 and includes an inclined drop tube 8 opening into the base 10 of the reaction chamber beneath the fluidised bed 4. A discharge tube 12 extends horizontally from the lower end of the drop tube 8 and opens in to a conduit 14. In an alternative arrangement, the discharge tube may extend in an inclined mode. A gas-operated ejector in the form of a nozzle 16 protrudes into the discharge tube 12 through the wall of the tube 8 and is disposed adjacent the lower margin of the tube 12 as seen in the drawings.

A classifier 18 comprises a central perforated core 20 surrounded by an annular manifold 22 having a gas inlet 24. The core 20 is connected to the conduit 14, the tube 12 opening into the conduit at a location above the classifier 18. The core 20 at its relatively lower end is coupled to a valve 26 leading to a vessel 28.

The conduit 14 extends from the classifier 18 and is connected into the reaction chamber 2 at a point 30 above the level of the fluidised bed 4.

In operation, a bed of particulate material, for example silica sand is contained within the reaction chamber 2. The particles are fluidised by air in a conventional manner. In this example, the fluidised bed is employed for the combustion of coal, the bed being preheated prior to the introduction of fuel which is then combusted therein. During the combustion process, large ash particles are formed and can accumulate giving rise to oversize material within the bed resulting in an adverse effect upon fluidisation. It is thus necessary to regrade or classify the material of which the bed is composed to rid the bed of such oversize materials whilst retaining particles of an acceptable size fraction. In the present invention, bed material flows down the drop tube 8 and assumes an angle of repose within the tube 8 and the tube 12. Upon actuation of the ejector, that is by the introduction of a gas, conveniently air, through nozzle 16, the flow of particles of the material is induced along tube 12. The positioning of the nozzle 16 is critical in that it needs to be in the correct disposition in relation to the angle of repose whereby the particles at the foot of the angle are impelled forwards causing particle flow. The particles flow along the tube 12 and pass into the conduit 14 wherein they descend into the classifier 18. A gas, e.g. air, is introduced to the manifold 22 through inlet 24 and has the effect of classifying the particles flowing through the core 20. Classification is achieved by the entrainment of particles of an acceptable size in the air passing through the perforated core 20 dependent upon the velocity of the air in the core 20, denser or larger particles requiring high velocity. These particles flow up the conduit and re-enter the reaction chamber 2 at point 30 in the freeboard above bed 4. The particles of an oversize fraction descend through the core 20 and with valve 26 open, pass into vessel 28 for discharge from the system.

- 6 -                                    0132061

The flow rate of particles into the classifier has to be controlled in order to avoid blockage and thus malfunctioning of the system. This control is achieved by varying the flow rate of air to the nozzle 16.

The fluidised bed system of the present invention is located external to the fluidised bed apparatus and thus since the returned particles do not enter the apparatus in the form of a spout. there is no erosion of in-bed surfaces and elutriation may well be reduced.

Another advantage of the invention is that by removing material from the bed through the drop tube and returning material elsewhere, gross circulation of material is enhanced thereby improving movement of large ash towards the classifier.

It is to be understood that the expression "air classifier" as used herein is intended to embrace any classifier in which an elastic fluid such as air, gas or steam is employed as the classifying medium.

**0132061**

PATENT CLAIMS:

1. An air classifier system for the classification of particles characterised by a drop tube (8) connectible to the reaction chamber (2) of a fluidised bed apparatus (1), a discharge tube (12) connected to the drop tube (8), a gas ejector (16) disposed within the discharge tube (12) for inducing particle flow therealong, a gas-operated classifier (18) communicating with the discharge tube (12), and the classifier (18) having an outlet connected to a conduit (14) for the return, in use, of particles to the fluidised bed apparatus (1).

2. A system according to claim 1, characterised in that the drop tube (8) is arranged in a vertical or an inclined mode.

3. A system according to claim 1 or 2, characterised in that the discharge tube (12) is disposed horizontally or in an inclined mode.

4. A system according to any one of the preceding claims characterised in that the discharge tube (12) opens into the conduit (14) at a point above the classifier (18).

5. A system according to any one of the preceding claims characterised in that the classifier (18) includes a perforated cylindrical core (20), an annular manifold (21) circumscribing the core (20), and an inlet (24) to the manifold (22).

6. A system according to claim 5, characterised in that the perforated cylindrical core (20) is connected at its upper end to the conduit (14), and at its lower end to a disposal means (28).

7. A system according to claim 6, characterised in that a valve (26) is located intermediate the perforated cylindrical core (20) of the classifier and the disposal means (28).

8. A system according to any one of the preceding claims characterised in that the gas ejector (16) is in the form of a nozzle protruding into the discharge tube (14).

9.      A fluidised bed apparatus including a reaction chamber (2) adapted to contain a fluidised bed (4) of particulate material, in combination with an air classifier system (6) characterised by a drop tube (8) opening into and leading from the reaction chamber (2), a discharge tube (12) connected to the drop tube (8), a gas ejector (16) disposed within the discharge tube (12) for inducing particle flow therealong, a gas-operated classifier (18) communicating with the discharbe tube (12), and the classifier (18) having an outlet connected to a conduit (14) which extends from the classifier (18) and opens into the reaction chamber (2).

10.     A combination according to claim 9, characterised in that the air classifier system (6) is external to the fluidised bed apparatus (1).

11.     A method of operating the combination of the fluidised bed apparatus (1) and the air classifier system (6) according to claim 9 or 10, characterised by the steps of establishing a fluidised bed (4) of particulate material within the reaction chamber (2), carrying out a reaction in the bed (4), withdrawing particles from the bed (4) through the drop tube (8), operating the ejector (16) to induce flow of particles along the discharge tube (12) into the conduit (14) and thence into the classifier (18), classifying the particles by the introduction of gas into the classifier (18) whereby particles of acceptable size are entrained in the gas, and returning the entrained particles to the reaction chamber (2).

12.     A method according to claim 11, characterised in that combustion carried out in the fluidised bed (4).

13.     A method according to claim 11, characterised in that gasification is carried out in the fluidised bed (4).

14.     A method according to any one of claims 11 to 13 characterised in that the gas employed in the ejector (16) and the classifier (18) is air.

15.   A method according to claim 14, characterised in_that the air is provided at ambient temperature.

16.   A method according to claim 14, characterised in_that the air is preheated.

17.   A method according to any one of the preceding claims, characterised in_that the operation of the ejector (16) is modulated in order to vary the rate of particle flow to the classifier (18).

FIG.I

2/2

FIG.2